# EUROPÄISCHE PATENTSCHRIFT

(11) **EP 0 910 814 B1**
(45) Veröffentlichungstag und Bekanntmachung des Hinweises auf die Patenterteilung: **13.06.2001**
(21) Anmeldenummer: 97932762.4
(22) Anmeldetag: 14.07.1997
(51) Int. Cl.: G03B 19/18, H04N 5/232

(54) **VORRICHTUNG ZUR STEUERUNG, REGELUNG UND ÜBERWACHUNG EINER LAUFBILDKAMERA**
DEVICE FOR CONTROLLING, REGULATING AND MONITORING A MOTION-PICTURE CAMERA
DISPOSITIF DE COMMANDE, DE REGLAGE ET DE CONTROLE D'UNE CAMERA CINEMATOGRAPHIQUE

(30) Priorität: 12.07.1996 DE 19629484
(43) Veröffentlichungstag der Anmeldung: 28.04.1999
(73) Patentinhaber: ARNOLD & RICHTER CINE TECHNIK GMBH & CO. BETRIEBS KG, 80701 München (DE)
(72) Erfinder: TSCHIDA, Ernst, A-1130 Wien (AT); KOPPETZ, Michael, D-81669 München (DE); TRAUNINGER, Walter, A-2381 Laabe im Walde (AT)
(74) Vertreter: Ninnemann, Detlef, Dipl.-Ing.
(86) Internationale Anmeldenummer: DE9701518
(87) Internationale Veröffentlichungsnummer: WO9802778

(56) Entgegenhaltungen:
- US-A- 5 220 848
- US-A- 5 223 867
- US-A- 5 517 300
- PATENT ABSTRACTS OF JAPAN vol. 016, no. 227 (E-1207), 26.Mai 1992 -& JP 04 042673 A (MITSUBISHI ELECTRIC CORP), 13.Februar 1992,

## Beschreibung

Die Erfindung betrifft eine Vorrichtung zur Steuerung, Regelung und Überwachung einer Laufbildkamera gemäß dem Oberbegriff des Anspruchs 1.

Zur Bedienung einer Laufbildkamera sind vor und während der Aufnahme eine Vielzahl von Parametern einzustellen und zu variieren, wie beispielsweise die Aufnahmefrequenz, die Sektorblendenöffnung, die Irisblendenöffnung, die Schärfe und Brennweite des Objektivs. Einige dieser Parameter können durch Ablaufprogramme miteinander gekoppelt werden, um beispielsweise trotz unterschiedlicher Beleuchtungsverhältnisse während eines Takes eine konstante Tiefenschärfe beizubehalten. Hierzu wird der zeitliche Verlauf der Veränderung sowohl der Aufnahmefrequenz als auch der Sektoröffnung mittels eines Kamerakontrollgerätes programmiert und überwacht. Das Kamerakontrollgerät überwacht darüber hinaus weitere Kamerafunktionen wie die Koordination der einzelnen Kameramotoren, die Einstellung der Filmende-Vorwarnung, die Einstellung für den Rückwärtslauf und das Setzen von Zeitcodes und Userbits.

Die Einstellung der Irisblendenöffnung, der Schärfe und der Brennweite erfolgt an Objektivringen des Kameraobjektives. Zur einfacheren und zuverlässigeren Einstellung der Kameraobjektive werden dazu bevorzugt Bedienelemente verwendet, die entweder an der Kamera selber angebracht oder als Fernbedienungen realisiert sind.

Aus der EP-A-574 105 ist ein modulares Steuersystem für eine Kamera bekannt, bei dem die die Kamerafunktionen steuernden bzw. erfassenden Einrichtungen über einen Steuer- und Datenbus mit einer Handbedieneinheit oder mit einer Haupt-Handbedieneinheit verbunden sind, an die mehrere Unter-Handbedieneinheiten angeschlossen werden können. Mit diesem modularen Steuersystem ist eine Fernbedienung der Kamerafunktionen, Aufzeichnung der Kamerafunktionen sowie der Abruf gespeicherter bzw. programmierter Einstellungen und Einstellsequenzen möglich.

Bei diesem Steuersystem werden bestimmte Kamerafunktionen wie Zoom-, Fokus- und Iris-Einstellung in der einzelnen Handbedieneinheit bzw. in den voneinander getrennten Handbedieneinheiten, die aber über die Haupt-Handbedieneinheit miteinander verbunden sind, vorgenommen. Eine örtliche Trennung dieser Bedienungsfunktionen ist dabei nicht vorgesehen und aufgrund der Verbindung von Untereinheiten mit einer Haupteinheit auch nur in geringem Abstand voneinander möglich. Überwachungs-, Protokollierungs- und Datenerfassungsfunktionen sieht das bekannte modulare Steuersystem für eine Kamera ebenfalls nicht vor.

Aus der JP 4-42673 A ist eine Übertragung von Steuersignalen von einer Bedienerkonsole zu einer Kamera mittels Funksignale bekannt. Dieses System schließt aber nicht die Auftrennung der bedienerseitigen Einheiten in mehrere, den unterschiedlichen Kamerafunktionen zugeordnete sowie in die unterschiedlichen Funktionen der Steuerung, Überwachung und Datenerfassung zugeordnete Einheiten ein.

Neben den reinen Aufgaben zur Steuerung der Kamerafunktionen sind vor und während einer Filmaufnahme weitere Kontroll- und Protokollierungsaufgaben kamera- und aufnahmespezifischer Daten durchzuführen wie Protokollierung der Aufnahmesequenzen, Kameraeinstellungen, Bildfolgen und belichteten Filmlängen einer Kamerakassette und dgl. Diese Verwaltungsfunktionen werden von einer Vielzahl verschiedener Personen wahrgenommen und an unterschiedlichen Orten durchgeführt. Während der Filmaufnahmen und nach Abschluß der Filmaufnahmen zur Filmbearbeitung werden die Daten gesammelt, bearbeitet, wiederverwendet oder registriert. Eine Vielzahl dieser Daten wird für Memory-Funktionen verwendet, um beispielsweise bestimmte Kameraeinstellungen zu wiederholen, Filmsequenzen zu überarbeiten und dgl.

Die Verwaltung dieser Datenmengen ist zeitraubend und erfordert ein hohes Maß an Präzision ebenso wie die Einstellung der laufenden Kamera vor einer Aufnahme sowie die Erneuerung von Parametern während einer Aufnahme. Hierbei kommt es häufig zu Kollisionen der verschiedenen Bedienungspersonen sowie zu zeitraubenden Wiederholungen, Neueinstellungen und Veränderungen der Aufnahmeparameter und Kameraeinstellungen.

Neben den kameraspezifischen Steuer- und Überwachungsfunktionen ist es häufig erforderlich, Zubehöreinrichtungen sowie für die Laufbildkamerapositionierung und -ausrichtung verwendete Einrichtungen wie Stativkopf, Kamerawagen, Beleuchtungseinrichtungen und dgl., zu steuern und deren Einstellung zu überwachen und zu protokollieren. Derartige Steuer-, Überwachungs- und Protokollaufgaben sind beispielsweise für die Koordination und Synchronisation von Filmsequenzen (Takes) erforderlich, die zeitlich und/oder örtlich voneinander getrennt aufgenommen werden. Ein Beispiel hierfür ist die Verknüpfung natürlicher Aufnahmesequenzen sowie mittels computergestützter, insbesondere dreidimensionaler Simulation erstellter Aufnahmesequenzen, die räumlich und zeitlich so aufeinander abgestimmt sein müssen, daß bei der Verknüpfung der getrennt voneinander erstellten Aufnahmesequenzen der Eindruck eines realen, synchronen und unter dem gleichen Blickwinkel aufgenommenen Handlungsablaufs entsteht.

Zur Erzeugung derartiger Spezialeffekte werden mit einer Laufbildkamera reale Szenen gegebenenfalls unter Einbeziehung von Schauspielern aufgenommen und unabhängig hiervon dreidimensionale Computeranimationen erstellt, bei denen eine virtuelle Kamera über die Animationsszenen bewegt, insbesondere geschwenkt wird. Dies erfordert, daß die virtuelle Kamera exakt, das heißt räumlich und zeitlich, dieselbe Bewegung wie die reale Kamera ausführt, das heißt es müssen sämtliche kamera- und aufnahmespezifischen Daten, wie Hell/Dunkelsektor der Umlaufblende der Kamera, die Laufgeschwindigkeit der Kamera, Entfernungseinstellungen, Aufnahmewinkel, Objektivdaten usw., übereinstimmen.

Stimmen die entsprechenden Filmsequenzen überein, kann das Originalbild, das heißt die real gefilmten Szenen, abgetastet und die vorzugsweise dreidimensionale Computeranimation der Abtastsequenz überlagert werden, so daß die gemischten Aufnahmesequenzen mittels eines Belichters auf einen Negativfilm übertragen werden können.

Die Aufzeichnung sämtlicher kamera- und zubehörspezifischer Daten ist äußerst aufwendig, insbesondere dann, wenn - wie vorstehend ausgeführt wurde - die Einstellungen der Kamera und der Zubehöreinrichtungen von verschiedenen Bedienungspersonen an verschiedenen Orten und zu unterschiedlichen Zeitpunkten vorgenommen werden. Abgesehen von Ungenauigkeiten bei der Reproduktion der verschiedenen Einstellparameter ist die Datenaufzeichnung und Datenwiedergewinnung mit hohen Produktionskosten verbunden und führt in vielen Fällen zur Einschränkung der künstlerischen Freiheit des Regisseurs sowie der mit den einzelnen Einstellarbeiten betrauten Bedienungspersonen.

Aufgabe der vorliegenden Erfindung ist es, eine Vorrichtung zur Steuerung, Überwachung und Datenerfassung von Kamerafunktionen von verschiedenen Orten und unterschiedlichen Bedienungspersonen bei geringstmöglicher Beeinträchtigung des Steuerungsbetriebes der Kamera durch die Überwachung und Datenerfassung der Kamerafunktionen zu gewährleisten und ein schnelles und beliebig konfigurierbares Verbinden von Bedienungs- und Einstelleinheiten zu ermöglichen.

Diese Aufgabe wird erfindungsgemäß durch die Merkmale des Anspruchs 1 gelöst.

Die erfindungsgemäße Lösung ermöglicht eine universelle, störungssichere, einfache und netzwerksfähige Bedienung einer Laufbildkamera, deren Ansteuerung von verschiedenen Orten mit mobilen Einheiten und damit einen beliebigen Ortswechsel der voneinander unabhängigen Bedienungspersonen, eine Vereinfachung der Verwaltungsfunktionen, eine effizientere Filmproduktion mit geringeren Produktionskosten und kürzerer Produktionszeit unter Beibehaltung sämtlicher künstlerischer Freiheiten für den Regisseur und die an den Aufnahmesequenzen und Computeranimationen beteiligten Bedienungspersonen, ein schnelles und in beliebiger Weise konfigurierbares Verbinden der verschiedenen Bedienungs- und Einstelleinheiten sowie eine einfache, jederzeit reproduzierbare und bildsynchrone Aufzeichnung sämtlicher Daten der aufgenommenen Filmsequenzen.

Insgesamt sieht die erfindungsgemäße Lösung ein frei konfigurierbares System vor, bei dem Steuerungs-, Überwachungs- und Datenerfassungsfunktionen voneinander räumlich getrennt werden. Durch die Auftrennung der verschiedenen Funktionen der Steuerung, Kontrolle und Datenerfassung wird die örtliche Trennung der mit diesen Aufgaben betrauten Bedienungspersonen ermöglicht und damit die Voraussetzung dafür geschaffen, daß diese Personen sich vollständig jeweils auf die in ihren Aufgabenbereich fallende Funktion zur Steuerung, Kontrolle oder Datenerfassung der Kamera bzw. des Aufnahmebetriebes konzentrieren können.

Durch die Entkopplung der einzelnen Funktionen der Steuerung, Überwachung und Datenerfassung wird der wichtige Steuerungsbetrieb zur Steuerung der verschiedenen Kamerafunktionen nur minimal beeinträchtigt.

Weiterhin schafft die erfindungsgemäße Lösung eine universelle, einfache, störungssichere, ortsunabhängige und netzwerksfähige Fernbedienung, ohne daß eine Kabelverbindung zur Laufbildkamera erforderlich ist. Die Ansteuerung der Laufbildkamera sowie die Wahrnehmung der Verwaltungsfunktionen durch Protokollierung aufnahme- und kameraspezifischer Daten kann von beliebigen Stellen erfolgen und auch ein Ortswechsel während der Steuer- und Überwachungstätigkeit ist problemlos möglich. Darüber hinaus können eine zeitlich präzise Kopplung von Kamera-Rampenfunktionen mit der Verstellung der Objektiveinstellung durchgeführt und Memory-Funktionen erfüllt werden.

Es ist auch eine Kopplung verschiedener Laufbildkameras beispielsweise zur Protokollierung von aufnahme- und kameraspezifischen Daten über ein Netzwerk möglich, so daß ein Datenverlust vermieden, die Filmbearbeitung erleichtert und die Reproduktion bestimmter Kameraeinstellungen und Aufnahmesituationen ermöglicht wird.

Dabei können die bedienerseitigen Kontrolleinheiten auch mit vorhandenen Kabel-Fernbedienungseinheiten gekoppelt werden, so daß die Kompatibilität mit vorhandenem Gerät gesichert ist. Dabei ist die Datensicherheit ebenso gewährleistet wie die Störunanfälligkeit und eine benutzerspezifische Hierarchie, bei der den Benutzern bestimmte Prioritätsrechte zugeordnet werden, die im Falle kollidierender Daten eine Datenauswahl nach Prioritätsrechten sicherstellt.

Eine vorteilhafte Weiterbildung der erfindungsgemäßen Lösung ist dadurch gekennzeichnet, daß die Steuer- oder Datenerfassungseinheit mit einer filmfeste Markierungen erzeugenden und/oder erfassenden Einrichtung verbunden ist bzw. sind.

Durch die Verknüpfung sämtlicher kamera- und zubehörspezifischer Daten mit filmfesten Markierungen werden den Filmsequenzen jederzeit reproduzierbare, aufnahmespezifische Daten zugeordnet, die eine exakte Verknüpfung unabhängig voneinander erstellter Realszenen und computergestützter, dreidimensionaler Animationsszenen bei geringem Zeit- und damit Produktionsaufwand gewährleistet.

Anhand von in der Zeichnung dargestellten Ausführungsbeispielen soll der der Erfindung zugrundeliegende Gedanke näher erläutert werden. Es zeigen:
- Figur 1 -: ein schematisches Blockschaltbild einer Laufbildkamera mit mehreren Fernbedienungs- und Aufzeichnungsmodulen;
- Figur 2 -: ein schematisches Blockschaltbild einer Laufbildkamera mit drei Funk-Fernbedienungsmodulen und einer Kabel-Handbedienungseinheit;
- Figur 3 -: ein Netzwerksaufbau mit zwei Mikrocomputern und einem Fileserver, die über einen Zugriffs-Transceiver miteinander verbunden sind;
- Figur 4 -: einen schematischen Netzwerksaufbau mit jeweils einer Arbeitsstation, die über jeweils einen Mikrowellen-Transceiver mit einem Netzwerk verbunden sind;
- Figur 5 -: eine Draufsicht und Seitenansicht einer universellen Motorsteuereinheit;
- Figur 6 -: eine Draufsicht und Seitenansicht einer bedienerseitigen Funk-Steuereinheit;
- Figur 7 -: eine Draufsicht auf eine kombinierte Funk-Steuereinheit;
- Figur 8 -: einen schematischen Signalflußplan für ein Kamera-Objektivsystem;
- Figuren 9 und 10 -: eine schematische Darstellung der einzelnen Komponenten des Kamera-Objektivsystems gemäß Figur 8;
- Figur 11 -: ein schematisches Blockschaltbild eines Datenaufzeichnungs- und Steuersystems;
- Figur 12 -: ein detailliertes Blockschaltbild des Datenaufzeichnungs- und Steuersystems gemäß Figur 11;
- Figuren 13 und 14 -: eine Vorderseiten- und Rückseitenansicht eines universellen Datenaufzeichnungsgerätes.

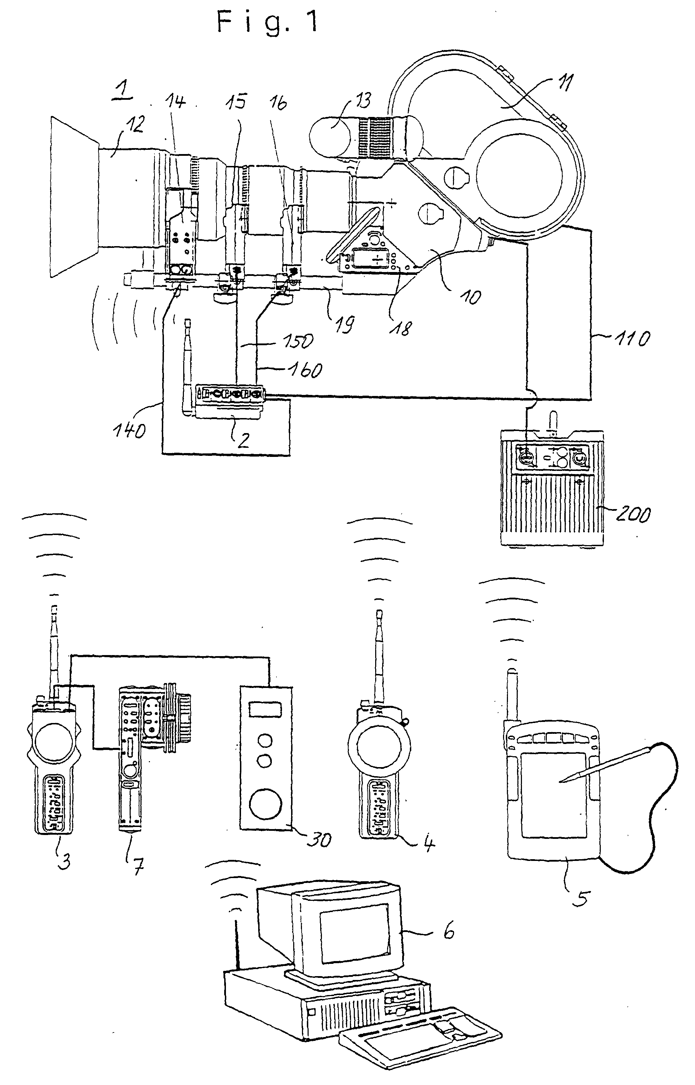

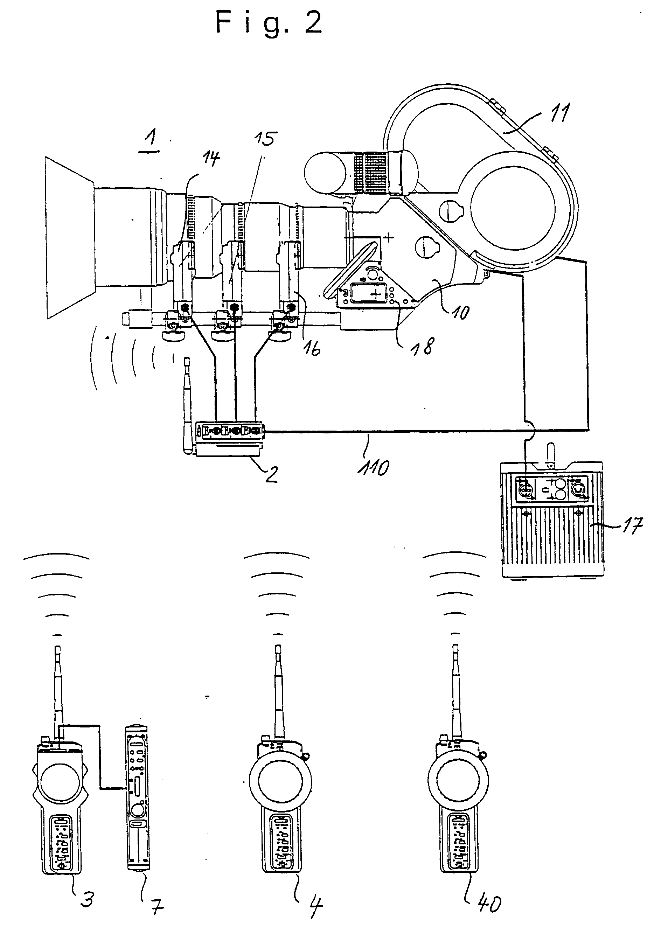

In den Figuren 1 und 2 ist schematisch ein Steuer-, Regel- und Überwachungssystem für eine Laufbildkamera dargestellt, das zur Steigerung der Mobilität eine drahtlose Steuerung und Überwachung sämtlicher Kamerafunktionen ermöglicht, aber auch mit Verdrahtung betreibbar ist.

Die Laufbildkamera 1 besteht aus einem Kameragehäuse 10 mit einem darin angeordneten Kamerawerk zum Transport des Laufbildfilms, einer rotierenden Blendenscheibe, Gehäuseanschlüssen für die Kamerakassette 11, das Kameraobjektiv 12 und den Kamerasucher 13 sowie einem Bedienfeld 18 zur Einstellung, Speicherung und zum Abruf verschiedener Kamerafunktionen. Auf zwei mit dem Kameragehäuse 10 verbundenen Irisstangen 19 sind eine Fokus-Antriebseinheit 14, eine Zoom-Antriebseinheit 15 und eine Iris-Antriebseinheit 16 angeordnet, die beispielsweise entsprechend der Antriebseinheit gemäß der DE 42 20 129 A1 ausgebildet sind. Die Stromversorgung der Laufbildkamera 1 erfolgt durch einen Kamera-Akkumulator 200, der getrennt vom Kameragehäuse 10 oder in das Kameragehäuse 10 integriert angeordnet ist.

Die Steuer-, Regel- und Überwachungseinheit der Laufbildkamera 1 ist über eine Verbindungsleitung 110 mit einer kameraseitigen Steuer- und Erfassungseinheit 2 verbunden, an die über Leitungen 140, 150 und 160 auch die Fokus-Antriebseinheit 14, die Zoom-Antriebseinheit 15 und die Iris-Antriebseinheit 16 angeschlossen sind. Die Steuer-, Regel- und Überwachungseinheit der Laufbildkamera 1 steuert und überwacht die verschiedenen Kamerafunktionen wie Transportgeschwindigkeit des Laufbildfilms, Einstellung der Spiegelblende, Betätigung einer Videoausspiegelung usw. sowie kassettenseitiger Daten wie Art der Kassette, Länge des belichteten und unbelichteten Films usw.

Die kameraseitige Steuer- und Erfassungseinheit 2 ist wahlweise für den Funk- oder Kabelbetrieb ausgelegt und kompatibel mit bestehenden Fernbedienungseinheiten, die zur Kabel-Fernbedienung eingesetzt werden. Für den Funkbetrieb weist die kameraseitige Steuer- und Erfassungseinheit 2 eine Funk-Modemeinheit auf, die als "Funk-Acces-Point" für ein sternförmiges Funknetz dient. Sie enthält weiterhin einen Mikroprozessor zur Kopplung der verschiedenen kameraseitigen Bauteile mit der Funk-Modemeinheit zur Abgabe und zum Empfang von Steuer- und Überwachungssignalen.

Für den Kabelbetrieb der kameraseitigen Steuer- und Erfassungseinheit 2 wird anstelle der Antenne ein Kabel angeschlossen oder im Falle eines Verzichts auf die Funk-Modemeinheit die Verbindung zu den bedienerseitigen Kontrolleinheiten über einen Kamerasteuerungs-BUS hergestellt, so daß vorhandene Kabel-Handeinheiten direkt an die kameraseitige Steuer- und Erfassungseinheit 2 angeschlossen werden können, während drahtlose Fernbedienungseinheiten über einen Steuer-BUS-Adapter angeschlossen werden.

Auf der Fernbedienungsseite ist eine erste bedienerseitige Kontrolleinheit 3 vorgesehen, an die wahlweise Kabel-Fernbedienungseinheiten 7, 30 angeschlossen und den verschiedenen Kamera- und Objektivfunktionen zugeordnet werden können. So kann beispielsweise die Fernbedienungseinheit 7 zur Zoom- und Iris-Kontrolle verwendet werden, während die Fernbedienungseinheit 30 zur Fokuseinstellung, Einstellung der Transportgeschwindigkeit und dgl. dient. Eine zweite Kontrolleinheit 4 ist zum ausschließlichen Funkbetrieb vorgesehen und kann z.B. der alleinigen Fokuseinstellung dienen.

Eine dritte Kontrolleinheit 5 ist als "Pen-based Computer" ausgelegt, d.h. als Handterminal zur Datenübertragung. Ein derartiges Handterminal eignet sich nicht nur zur Eingabe von Steuerbefehlen, sondern vor allem zur Durchführung von Überwachungsfunktionen, d.h. zur Anzeige und Speicherung kamera- und aufnahmespezifischer Daten. Diese Daten können mit zusätzlichen Informationen gekoppelt werden, beispielsweise die Zuordnung bestimmter Filmsequenzen zum Drehbuch, eines Filmcodes zu bestimmten Kameraeinstellungen usw. Ein derartiger Pen-based Computer wird beispielsweise von der Firma TELXON unter der Produktbezeichnung PTC-1140 angeboten und verfügt über ein Display mit 64 Graustufen und einen kabellosen, elektromagnetischen Stift, mit dem Aufzeichnungen direkt auf den Bildschirm erstellt werden bzw. aus vorgegebenen Menüs Funktionen ausgewählt werden können. Das integrierte Funkmodul zur kabellosen Datenübertragung verwendet das Funkverfahren Spread-Spectrum, MODACOM oder ARDIS.

Die Stromversorgung erfolgt im Funkbetrieb über angeflanschte Akkus bei den besienerseitigen Kontrolleinheiten, an der Kameraseite wird über das Anschlußkabel zur Kamera die Stromversorgung zugeführt. Ein paralleler Betrieb von mehreren Übertragungsstrecken ist möglich, es können auch - wie vorstehend beschrieben - mehrere bedienerseitige Kontrolleinheiten mit einer Kameraeinheit eine Verbindung aufrechterhalten (Netzwerksbetrieb), wodurch eine Verkabelung bei Verwendung mehrerer Kontrolleinheiten entfallen kann. Im Kabelbetrieb kann auch der Akku weggelassen werden, da die Stromversorgung der Kontrolleinheit über die Kabelverbindung von der Kameraseite her zugeführt wird.

In das Funknetz mit einbezogen werden kann eine Workstation 6, die die Anzeige, Überwachung und Protokollierung sämtlicher kamera- und aufnahmespezifischer Daten ermöglicht sowie die Eingabe von Steuerbefehlen erlaubt, Prioritäten der bedienerseitigen Kontrolleinheiten vorgibt usw.

Die Funkverbindung zwischen den bedienerseitigen Kontrolleinheiten 3, 4, 5 bzw. der Workstation 6 und der kameraseitigen Steuer- und Erfassungseinheit 2 wird mittels Mikrowellen-Transceiver hergestellt, die eine Spread-Spektrum-Sende/Empfangs-Technologie benutzen. In diesen Transceivern sind Sender und Empfänger zusammengefaßt und sie sind mit einer einheitlichen Schnittstelle zu den kameraseitigen und bedienerseitigen Geräteteilen ausgestattet.

Zur Erzielung einer hohen Datensicherheit wird ein spezielles Protokoll mit automatischem CRC-Check verwendet, welches samt Hardware-Technologie von den Funk-LANs aus der Computertechnik übernommen wird. Die Geräte arbeiten üblicherweise im Frequenzbereich von 2,4 bis 2,5 GHz, das in vielen Ländern für eine unlizenzierte Datenübertragung freigegeben ist. Diese Gerätetechnik ermöglicht eine zuverlässige und bedienerfreundliche Einbindung von Kontrollrechnern in die Kamera- und Objektivkontrolle in Verbindung mit einem kameraspezifischen Software-Driver.

Figur 2 zeigt in Abwandlung der Anordnung gemäß Figur 1 ein Netzwerk mit einer kameraseitigen Steuer- und Erfassungseinheit 2 und drei bedienerseitigen Kontrolleinheiten 3, 4, 40, von denen die Kontrolleinheit 3 zusätzlich mit einer Kabel-Fernbedienungseinheit 7 verbunden ist, deren Signale mittels des Funkmodems der Konrolleinheit 3 in Funksignale umgesetzt werden.

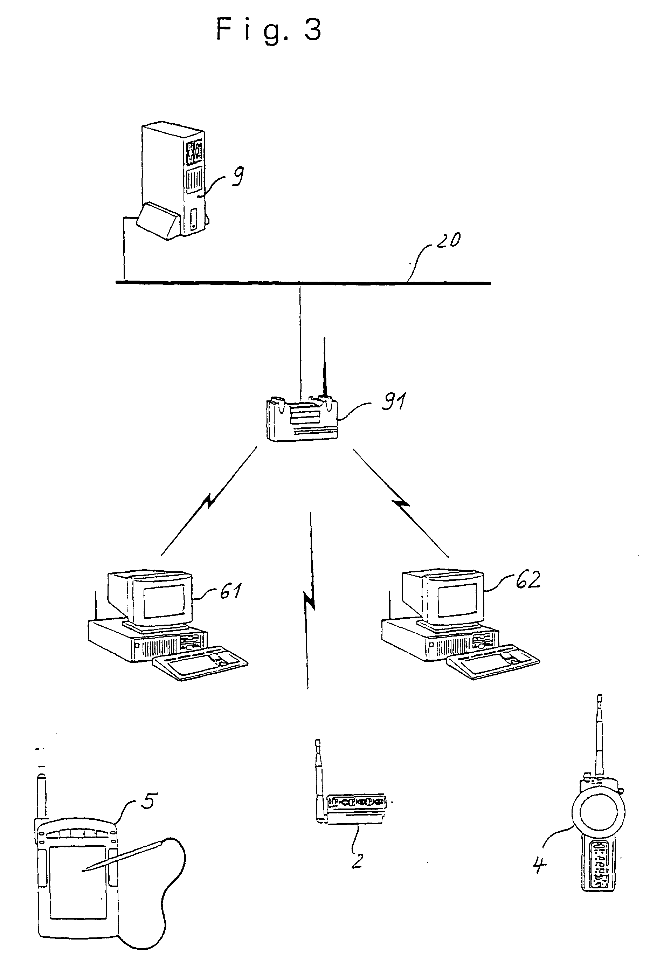

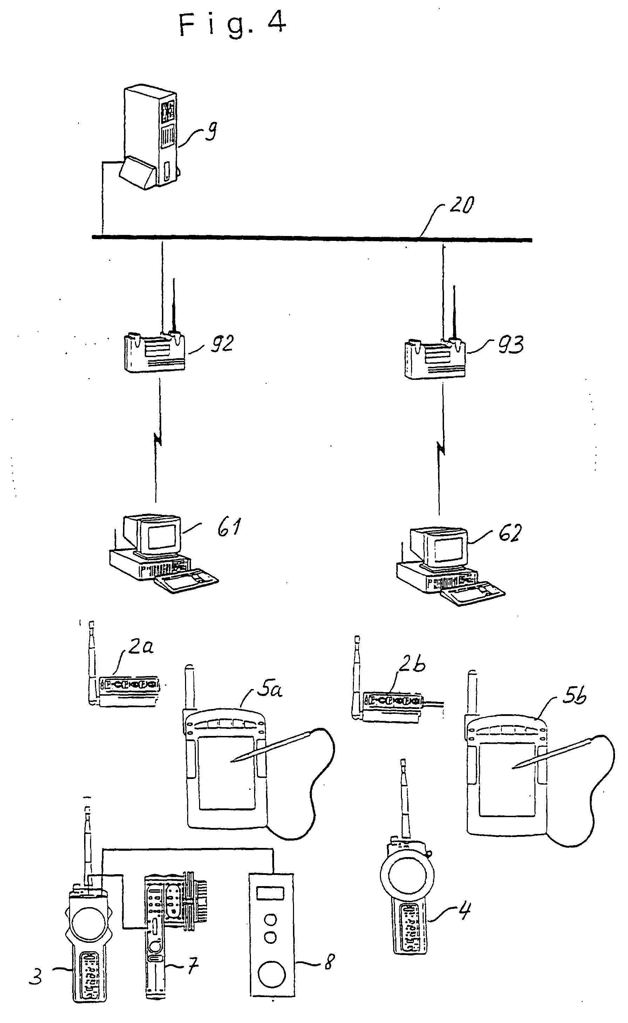

In den Figuren 3 und 4 sind Beispiele für die Einbindung der erfindungsgemäßen Vorrichtung zur Steuerung, Regelung und Kontrolle von Laufbildkameras in ein Netzwerk dargestellt.

Figur 3 zeigt die Verbindung eines zentralen Funk-Acces-Points 91 mit einem Steuer- und Daten-BUS 20, der mit einem Fileserver 9 verbunden ist. Der Funk-Acces-Point 91 sendet und empfängt Steuerbefehle und Daten von einer kameraseitigen Steuer- und Erfassungseinheit 2 sowie bedienerseitigen Kontrolleinheiten 4, 5 und zwei Arbeitsstationen 61, 62. Damit wird eine übergeordnete Steuer- und Überwachungseinrichtung geschaffen, die die Koordination verschiedener Bedienerfunktionen ermöglicht und beispielsweise zur Einstellung von Bedienerhierarchien eingesetzt werden kann, die zentrale Steuerung und Überwachung verschiedener Laufbildkameras ermöglicht und gegebenenfalls auch zur Synchronisation verschiedener Kameras zur Aufnahme ein- und derselben Szene eingesetzt werden kann.

Alternativ hierzu ist in Figur 4 die Anordnung zweier Funk-Acces-Points 92, 93 dargestellt, die jeweils auf eine bedienerseitige Funkfrequenz ausgerichtet sind, so daß sie jeweils nur die Sende- und Empfangssignale der bedienerseitigen Kontrolleinheiten 3 (in Verbindung mit Kabel-Fernbedienungseinheiten 7, 8), 5a bzw. 4, 5b und den kameraseitigen Steuer- und Erfassungseinheite 2a bzw. 2b, die jeweils einer Laufbildkamera zugeordnet sind, senden und empfangen.

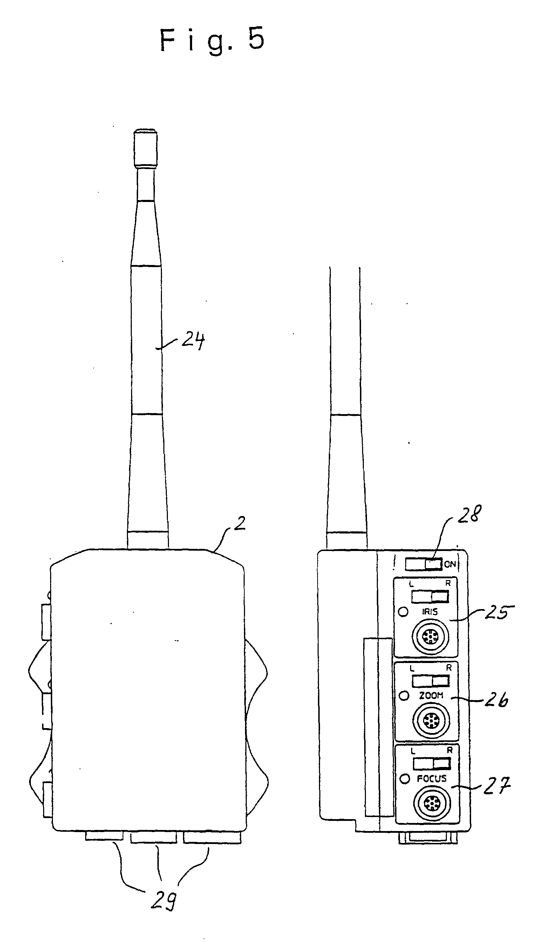

Figur 5 zeigt eine kameraseitige Steuer- und Erfassungseinheit 2, die sowohl für einen Funkbetrieb als auch für einen Kabelbetrieb eingesetzt werden kann. Die verschiedenen Antriebseinheiten für die Fokus-, Zoom- und Iriseinstellung werden entsprechend ihrer Funktion an den zugeordneten Buchsen 25, 26, 27 angeschlossen bzw. alternativ mit einer fünfpoligen BUS-Buchse verbunden. Unmittelbar neben der jeweiligen Motoranschlußbuchse sind Schalter für die Laufrichtungsumpolung vorgesehen. Die Kamera- und Kassettenfunktionen können über eine Schnittstelle 29 eingegeben werden. Mit einem EIN/AUS-Schalter 28 wird die kameraseitige Steuer- und Erfassungseinheit 2 initiiert. Über eine Mikrowellenantenne 24 werden die Signale an die Kontrolleinheiten gesendet bzw. von diesen empfangen.

Die Ausnutzung der Netzwerkeigenschaften der Funk-LAN-Technologie erlauben in Verbindung mit einer geeigneten Betriebssoftware das Implementieren neuer Funktionalitäten und damit Produktfeatures. Speziell erwähnenswert ist die Möglichkeit der zeitlich präzisen Kopplung von Kamerarampenfunktionen mit der Verstellung der Objektiveinstellung. Weiterhin können alle Memoryfunktionen, wie sie durch die Memorymoduloption einer Zoom-Motoreinheit zur Verfügung stehen, in erweiterter Form auf Funk-PC's implementiert werden. Die Möglichkeiten reichen hier an einfache Motion-Control-Systeme heran. Eine Weiterleitung von Timecode und Szenendaten für Verwaltungsfunktionen kann auch ohne direkten Anschluß des Objektivsteuersystems an die Kamera erfolgen.

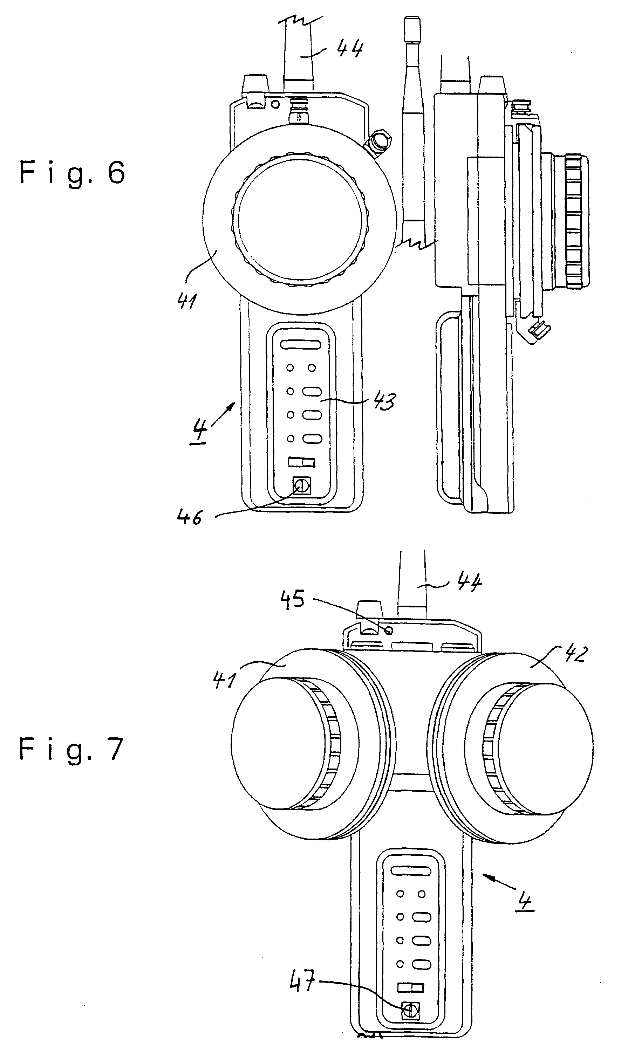

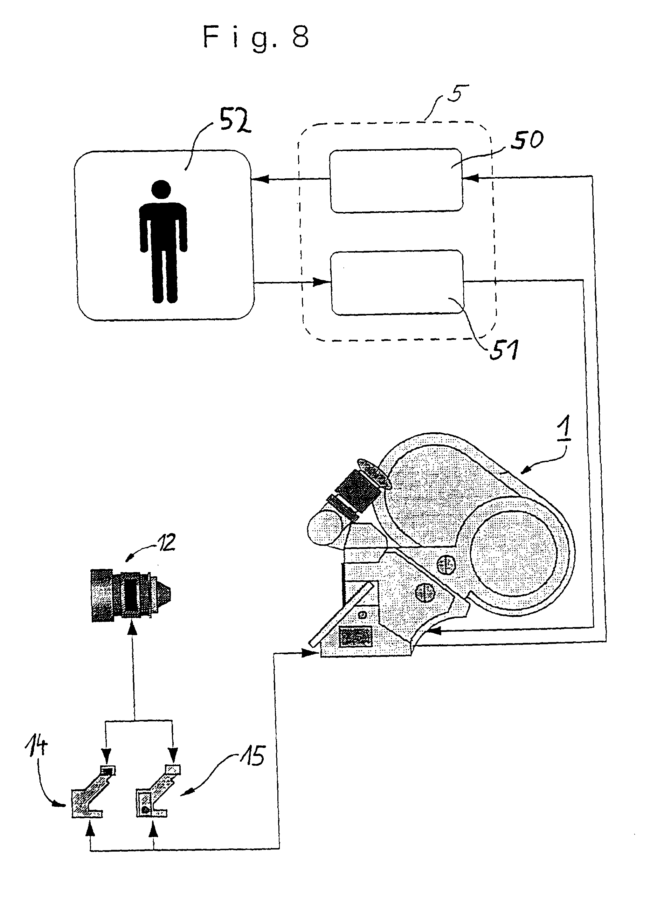

In den Figuren 6 und 7 sind zwei Varianten einer bedienerseitigen Kontrolleinheit 4 dargestellt, die aus einem Bedienungshandrad 41 bzw. zwei Bedienungshandrädern 41, 42 zur Eingabe von beispielsweise Zoom-, Iris- und/oder Focus-Daten, einem Eingabe- und Anzeigefeld 43 und einer Antenne 44 bestehen. Die bedienerseitige Kontrolleinheit ist modular aufgebaut und setzt sich aus folgenden Modulen zusammen: einem Controller, dem bzw. den Bedienungshandrad/rädern, einem Modem, einer Batterie und einem Steuersystem-BUS-Adapter.

Der Controller ist die zentrale Einheit des Gerätes und beinhaltet eine Mikroprozessorkontrolle für die Umformung der Stellinformationen und BUS-Signale in ein für die Funkübertragung geeignetes Format. Zusätzlich können die Daten eines RS-232-Kanals zur Übertragung hinzugefügt werden.

Das Modem-Modul beinhaltet ein Funk-Datenmodem mit abgestimmtem Anschluß zum Controller.

Der Steuersystem-BUS-Adapter besteht im wesentlichen aus einem Verteilerstück mit einer Objektiv-Steuer-BUS- und Kamerasteuereinheit-Buchse, womit sich mehrere Möglichkeiten der Aufrüstung für einen Mehrachsenbetrieb und der Verwendung von bereits vorhandenen Objektivsteuer-Handeinheiten ergeben. An den Steuersystem-BUS-Adapter können eine Zoomeinheit mit oder ohne Fokussiereinheit sowie ein zur Steuerung der Kamerafunktionen kompatibles Gerät, wie die Fernbedienungseinheiten 7, 8, angeschlossen werden.

Weiterhin kann ein zweiter Fokusknopf angeschlossen werden, so daß eine Fokus/Iris-Haupteinheit zur Verfügung steht, ohne daß eine Zoom-Haupteinheit benötigt wird. Diese Konfiguration läßt sich ohne Modemteil und Akku auch über ein vorhandenes fünfpoliges Objektiv-Steuer-BUS-Kabel mit der kameraseitigen Steuer- und Erfassungseinheit verbinden.

Die Bedienfunktionen und dafür vorgesehene Bedienelemente sind analog zu den existierenden Kabel-Kontrolleinheiten ausgelegt und mit Bedienelementen für den Funkbetrieb erweitert. Dies betrifft vor allem die Vorwahl eines von drei zur Verfügung stehenden Funkkanälen, was auch den gleichzeitigen Betrieb von drei Funksets an einem Drehort erlaubt.

In Figur 8 ist in einer schematischen Übersicht der Informationsfluß zwischen dem Kamera- und Objektivsystem sowie der bedienerseitigen Kontrolleinheit dargestellt. Die bedienerseitige Kontrolleinheit 5, die in diesem Ausführungsbeispiel als Pen-Based Computer ausgeführt ist, enthält eine Anzeigeeinheit 50 sowie eine Bedieneinheit 51, die drahtlos oder über ein Kabel mit der Laufbildkamera 1 verbunden sind. Mit dem Objektivanschluß der Laufbildkamera 1 ist ein Objektiv 12 verbindbar, das mit zwei Motoreinheiten 14, 15 zur motorischen Verstellung koppelbar ist.

Die Motoreinheiten 14, 15 empfangen vom Objektiv 12 Daten über die Schärfenstellung, die Irisstellung und die Objektivkennung und treiben ihrerseits die Verstelleinrichtungen des Objektivs an. Weiterhin geben die Motoreinheiten 14, 15 Erfassungssignale über die Ist-Schärfe, die Ist-Iriseinstellung und die Objektivkennung an die Laufbildkamera 1 ab und empfangen von der Laufbildkamera Signale für die Soll-Schärfe und die Soll-Iriseinstellung.

Von der Laufbildkamera 1 werden Signale über die aktuellen Objektivwerte und die aktuellen Kamerawerte an die Anzeigeeinheit 100 der bedienerseitigen Kontrolleinheit 5 abgegeben und Signale über die angewählten Objektivwerte, die angewählten Kamerawerte und errechnete Kombinationswerte, wie beispielsweise die Iris/Bildfrequenz, von der Bedieneinheit 101 der bedienerseitigen Kontrolleinheit 5 empfangen.

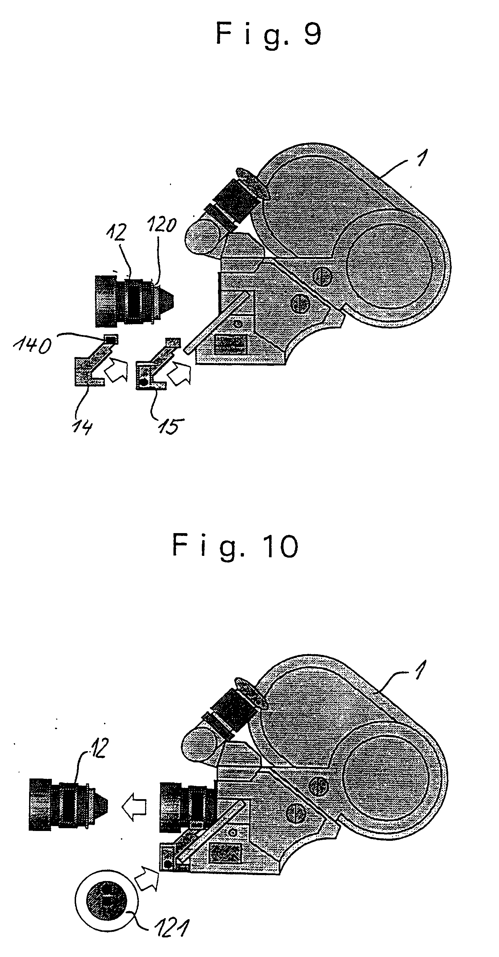

In den Figuren 9 und 10 ist eine schematische Übersicht der verwendeten Komponenten eines Kamera-/Objektivsystems dargestellt.

Das Kameraobjektiv 12 weist Kodierscheiben für die optischen Stellgrößen auf und wählt eine PL-Fassung, die keine elektrische Schnittstelle zwischen dem Objektiv und der Laufbildkamera aufweist. Die Motoreinheit 14 enthält eine Abtastung der Kodierscheiben und dient beispielsweise der Schärfeneinstellung des Objektivs 12. Die zweite Motoreinheit 15 dient zur Iriseinstellung und ist ebenso wie die erste Motoreinheit 14 direkt mit der Laufbildkamera 1 verbunden und wird aus dem kameraseitigen Akkumulator gespeist.

Figur 10 zeigt schematisch die Möglichkeit eines Objektivwechsels ohne Entfernen der Motoreinheit sowie einen wahlweise möglichen Anschluß für eine direkte manuelle Betätigung mit einer entsprechenden Steuereinheit 21.

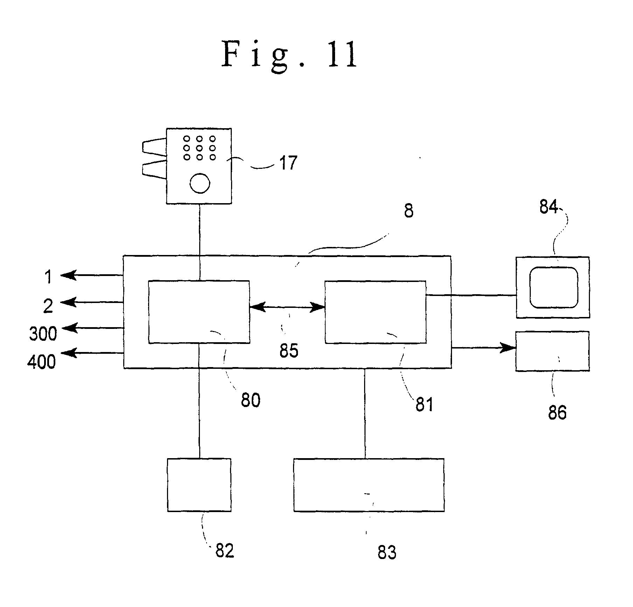

Figur 11 zeigt ein Übersichts-Blockschaltbild eines Datenaufzeichnungs- und Steuersystems 8, das mit verschiedenen für eine Filmaufnahme notwendigen und geeigneten Komponenten sowie mit einer Anzeigeeinheit 84, Eingabetastaturen 82, 83 sowie nicht näher dargestellten, die erfaßten und gegebenenfalls gespeicherten Daten weiterverarbeitenden Einheiten 86 und mit einer speziellen Markierungseinheit 17 verbunden ist. Das Datenaufzeichnungs- und Steuersystem 8 enthält eine Datensammeleinrichtung 80 sowie eine Datenaufzeichnungs- und Steuereinrichtung 81, die über eine vorzugsweise bidirektionale Daten- und Steuerleitung 85 miteinander verbunden sind. Bei einem reinen Datenaufzeichnungsbetrieb würde es sich bei der Daten- und Steuerleitung 85 um eine unidirektionale Leitung handeln, bei der die in der Datensammeleinrichtung 80 zusammengefaßten Daten, die von den verschiedenen Komponenten eines Filmaufnahmesystems gewonnen werden, an die Datenaufzeichnungs- und Steuereinrichtung 81 abgegeben werden, die die gesammelten Daten verknüpft mit einem Signal für den Beginn einer Aufnahmesequenz speichert und gegebenenfalls anzeigt bzw. mit weiteren Eingabedaten verknüpft.

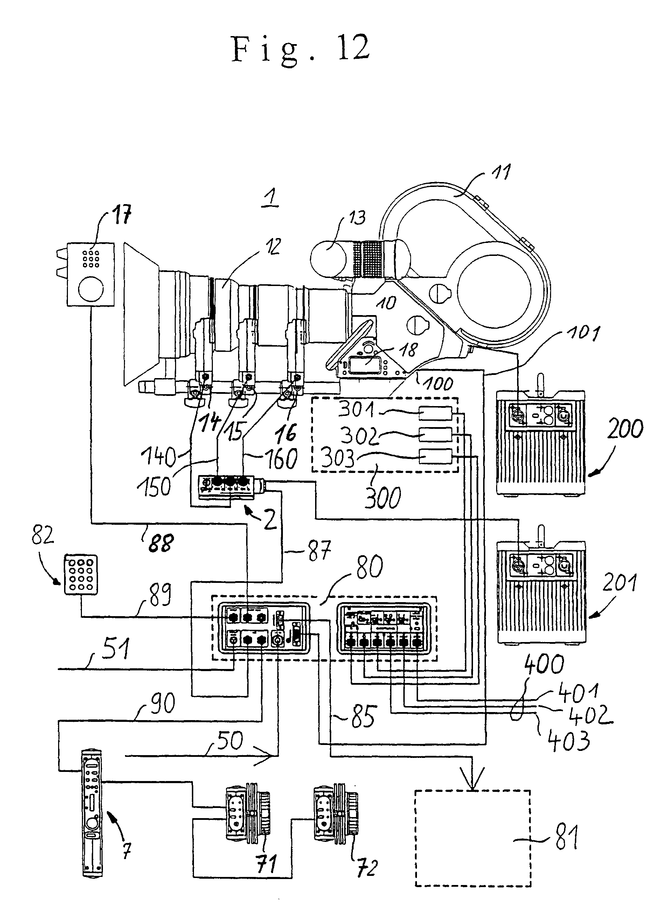

Figur 12 zeigt ein Ausführungsbeispiel für die Verbindung eines Datenaufzeichnungs- und Steuersystems mit einer Laufbildkamera, mehreren Kamerakomponenten, Einstell- und Bedieneinheiten für die Laufbildkamera und Kamera-Zubehör sowie sonstiger Komponenten, wie Stativkopf, Kamerawagen und dgl.

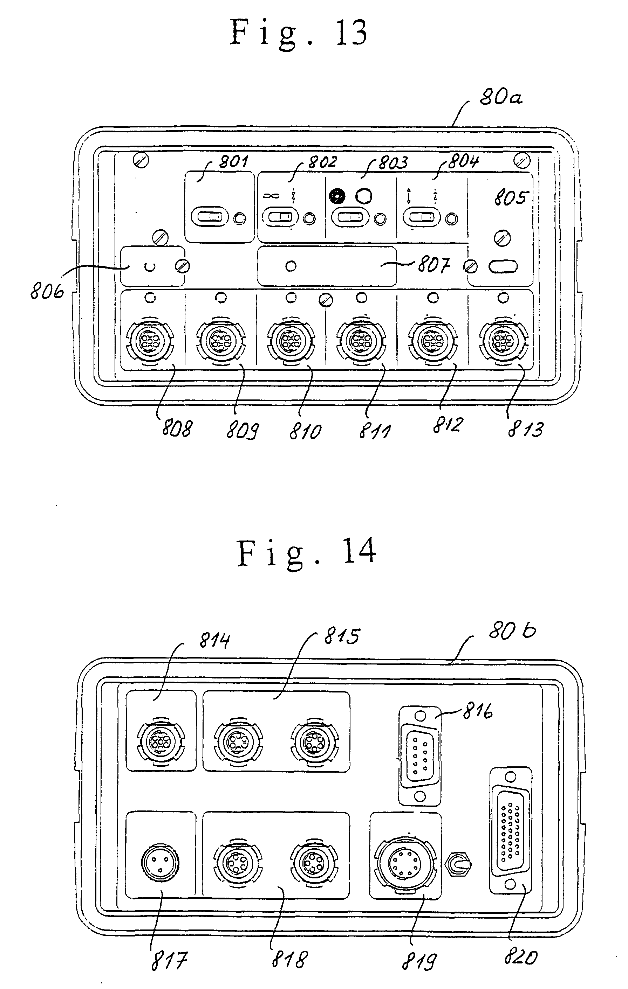

Das Datenaufzeichnungs- und Steuersystem besteht in dem in Figur 12 dargestellten Ausführungsbeispiel aus einer Datensammeleinrichtung 80 mit mehreren front- und rückseitigen Anschlüssen und Bedienungselementen, für die ein Ausführungsbeispiel in den Figuren 13 und 14 dargestellt ist, und einer über eine Daten- und Steuerleitung 85 mit der Datensammeleinrichtung 80 verbundenen Datenaufzeichnungs- und Steuereinrichtung 81. Diese Datenaufzeichnungs- und Steuereinrichtung 81 kann vorzugsweise aus einem transportablen Computer (Notebook, Laptop) oder einem fest installierten Computer bestehen.

Analog zu den vorstehend beschriebenen Ausführungsbeispielen ist die aus einem Kameragehäuse 10 mit darin angeordnetem Kamerawerk zum Transport des Laufbildfilms, einer rotierenden Umlaufblende, gegebenenfalls einer Irisblende, einer Kamerakassette 11, einem Kameraobjektiv 12, einem Kamerasucher 13 und einem Bedienfeld 18 zur Einstellung, Speicherung und zum Abruf verschiedener Kamerafunktionen bestehende Laufbildkamera 1 mit Irisstangen 19 versehen, auf denen eine Fokus-Antriebseinheit 14, eine Zoom-Antriebseinheit 15 und eine Iris-Antriebseinheit 16 angeordnet sind. Des weiteren ist die Laufbildkamera 1 mit einem Kamera-Akkumulator 200 verbunden.

Eine kameraseitige Steuer- und Erfassungseinheit 2 ist über Leitungen 140, 150, 160 mit der Fokus-Antriebseinheit 14, der Zoom-Antriebseinheit 15 und der Iris-Antriebseinheit 16 sowie mit einer weiteren Batterie 201 und über eine Leitung 87 mit der Datensammeleinrichtung 80 verbunden. An die Datensammeleinrichtung 80 ist über eine Leitung 101 eine kameraseitigen Buchse 100 angeschlossen, an der die kameraspezifischen Daten, wie Blendeneinstellung, Laufwerksgeschwindigkeit sowie Kassettendaten, anpaß- und eingebbar sind. Weiterhin ist die Datensammeleinrichtung 80 mit einem Positionssensor 300 für einen dreiachsigen Stativkopf verbunden, von dem Sensorsignale 301, 302, 303 für das Neigen, Kippen und Schwenken des Stativkopfes an die Datensammeleinrichtung 80 abgegeben werden. In gleicher Weise werden der Datensammeleinrichtung Sensorsignale über Leitungen 401, 402, 403 von einem Kamerawagen (Dolly) zugeführt, die die Schienenposition und Höhe sowie Art des Kamerawagens repräsentieren.

Eine bedienerseitige Einstell- und Steuereinheit 7 mit Handrädern 71, 72 zur Eingabe von Zoom-, Iris- und/oder Fokus-Daten sowie gegebenenfalls einem Eingabe- und Anzeigefeld ist über die Leitung 90 mit der Datensammeleinrichtung 80 verbunden, so daß auch diese Eingabedaten erfaßt und weiterverarbeitet werden können. Weitere Verbindungen bestehen zwischen der Datensammeleinrichtung 80 und einer Backup-Batterie 51, über eine Leitung 89 mit einer Eingabetastatur 82 sowie über eine Leitung 88 mit einer Markierungseinheit 17, die filmfeste Markierungen beispielsweise zu Beginn einer Aufnahmesequenz erzeugt.

In dem dargestellten Ausführungsbeispiel besteht die Markierungseinheit 17 aus einer Lichtmarkierungen auf den Laufbildfilm aufbringenden Einheit. Analog hierzu können aber auch mechanische Markierungen zu Beginn einer Aufnahmesequenz gesetzt werden, die es ermöglichen, die von den verschiedenen Einheiten erfaßten Daten mittels beispielsweise eines Bildzählers mit der betreffenden Aufnahmesequenz zu korrelieren, das heißt im Bedarfsfalle bildsynchron abzuspeichern.

Figur 13 zeigt eine Ansicht der Frontseite 80a einer Datensammeleinrichtung 80 mit den verschiedenen Schalt-, Anzeige- und Anschlußelementen zur Verbindung mit den in Figur 12 schematisch dargestellten Kamera- und Zubehöreinheiten. Über einen Schalter 801 wird die Datensammeleinrichtung 80 aktiviert und die Betriebsbereitschaft angezeigt. Über die Schalter 802, 803, 804 können die Erfassung, Einstellung und der Abgleich für die Fokus-Antriebseinheit, die Zoom-Antriebseinheit und die Iris-Antriebseinheit vorgenommen werden. Über eine Prüftaste 805 kann die Funktion und Drehrichtung der Zoom-, Iris- und Fokus-Antriebseinheit abgefragt werden.

Die Aktivierung der Markierungseinheit 17 gemäß Figur 12 erfolgt über eine Anzeige- und Schalteinheit 806 sowie die Aktivierung der Datenerfassung über ein Schalt- und Anzeigeelement 807. An die Buchsen 808 bis 813 werden Zubehörteile, wie Stativkopf und Kamerawagen zur Erfassung des Neigungs-, Kipp- und Schwenkwinkels des Stativkopfes sowie der Stellung, Höhe und Art des Kamerawagens erfaßt.

Die Rückseite 80b der Datensammeleinrichtung 80 weist einen Anschluß 814 für eine Eingabetastatur, Anschlüsse 815 für die Filmmarkierungseinheit, einen Anschluß 817 für die Backup-Batterie sowie Anschlüsse 818 für die Objektivsteuereinheiten, einen mehrpoligen Anschluß 816 für die Verbindung mit der Datenerfassungs- und Steuereinrichtung 81 gemäß Figur 12, eine Anschlußbuchse 819 zur Eingabe eines Timecodes und einem mehrpoligen Anschluß 820 für die Verbindung mit dem Kameraanschluß 100 auf.

Die von den verschiedenen Einheiten erfaßten Daten werden synchronisiert und mit den Kameradaten, das heißt synchron zu den Filmbildern einer Filmsequenz eingelesen. Die Istwerte der Daten werden gelesen und an die Datenerfassungs- und Steuereinrichtung 81 zur Aufzeichnung, Weiterverarbeitung und Abgabe von Signalen an Anzeigeeinrichtungen weitergereicht. Dabei kann die Aufzeichnung der Daten wahlweise mit einem auf den Laufbildfilm aufgebrauchten Timecode in Verbindung gebracht werden, so daß eine Zuordnung der Aufnahmeszene zur Echtzeit hergestellt wird.

Durch Aufbringen einer optischen Marke auf den Film mittels der Markierungseinheit 17 werden die von den verschiedenen Einheiten aufgenommenen Daten mit der jeweiligen Filmsequenz korreliert und die entsprechenden miteinander verknüpften Daten in einer vorgegebenen Datei abgelegt. Durch Abrufen der miteinander verknüpften Daten bzw. durch Ableitung von Steuersignalen aus den miteinander verknüpften Daten kann beispielsweise für die Einstellung einer virtuellen Kamera für 3D-Animationen eine bild- und aufnahmeobjektsynchrone Verknüpfung mit der jeweiligen Animation hergestellt werden, so daß die virtuelle Kamera beispielsweise genau denselben Schwenk wie eine reale Aufnahmekamera durchführt. Auf diese Weise können Spezialeffekte leichter in den Film eingebunden werden, indem beispielsweise das mit der realen Kamera aufgenommene Originalbild abgetastet und diesem Bild in der 3D-Animation überlagert wird. Das kombinierte Bild wird dann mittels eines Belichters auf den Negativfilm aufbelichtet.

Die Bildsynchronisation erfolgt über einen Bildzähler, der gegebenenfalls und bei Vorhandensein einer Timecode-Einrichtung mit dieser verknüpft ist. Durch Aufbringen einer filmfesten Markierung kann eine entsprechende Zuordnung jedes Filmbildes zur Aufnahmesequenz durch Inkrementieren jedes Filmbildes ausgehend von der filmfesten Markierung hergestellt werden. Grundsätzlich kann auf die Anbringung zusätzlicher filmfester Markierungen verzichtet werden, wenn die Timecode-Einrichtung entsprechend konfiguriert wird.

Ein wesentlicher Vorteil der Anordnung einer Datensammeleinrichtung 80 gemäß Figur 12 besteht darin, daß im Bedarfsfalle die Datensammeleinrichtung 80 aus dem Gesamtsystem herausgenommen werden kann, so daß auch ohne die Datensammeleinrichtung der Betrieb der Laufbildkamera 1 mit dem gesamten Zubehör gewährleistet ist. Die Einbeziehung einer Datensammeleinrichtung 80 in Verbindung mit einer Datenerfassungs- und Steuereinrichtung 81 gewährleistet eine effizientere Produktion unter Beibehaltung der künstlerischen Freiheiten der Bedienungspersonen sowie ein schnelles Zusammenstecken und Konfigurieren aller Einheiten nach Bedarf unter Einbeziehung auch mobiler Einheiten, keinerlei Beeinträchtigung des normalen Kamerabetriebes und eine bildsynchrone Speicherung sämtlicher kamera- und aufnahmespezifischer Daten.

Das Datenerfassungssystem versorgt den Benutzer mit den notwendigen Funktionen zur automatischen Aufzeichnung von Daten der Laufbildkamera, der Objektivmotoren, des Stativkopfes und Kamerawagens sowie zum Einstellen der verschiedenen Systemkonfigurationen entsprechend den Notwendigkeiten einer Aufnahmesequenz. Diese Funktion enthält die Einrichtung zum Markieren des Starts jeder individuellen Aufnahmesequenz durch Steuerung der Belichtungs-Markiereinheit 17. Die Funktion der Datensammeleinrichtung 80 enthält auch Bereichseinstell- und Abgleichfunktionen für die Objektiv-Einstelleinheiten und die Einstellung und Rückstellung von Ausgangspositionen des Stativkopfes und des Kamerawagen-Wegezählers.

Das System zeichnet bildbezogene Daten aller Aufnahmekomponenten auf und gibt die Daten parallel oder seriell an den Aufzeichnungscomputer 81 ab, der die Daten speichert, zuordnet und Steuer- und Anzeigesignale abgibt. In dem seriellen Datenstrom sind Bildzählinformationen mit Zeitrelationen zu Timecode-Daten eingebunden, die ebenfalls zu Beginn jeder Aufnahmesequenz erfaßt werden. Der Datenstrom besteht aus einer Serie verschiedener Informationstypen und wird zu dem Aufzeichnungscomputer 81 während einer Aufnahmesequenz mit einer Aufzeichnungsrate gesandt, die von der Aufnahmegeschwindigkeit der Laufbildkamera abhängt. Der Beginn der Aufzeichnung ist synchron zu dem Ansteuerimpuls für die optische Markiereinheit 17. Die Datenaufzeichnung wird automatisch durch die Datensammeleinrichtung beendet, wenn die Geschwindigkeit der Laufbildkamera beispielsweise unter drei Bilder pro Sekunde abfällt.

Zu Beginn jeder Filmsequenz wird eine Filmsequenzmarke unter Verwendung der filmfesten optischen Markierung zusammen mit den erfaßten, korrespondierenden Timecode-Daten aufgezeichnet und der Bildzähler wird auf den Wert Null zurückgesetzt. Die Datensammeleinrichtung 80 wird mittels des Markierungsimpulses nach dem Hochlaufen der Laufbildkamera angesteuert und die Datenerfassung statussynchron hierzu. Die optische Markiereinheit 17 und der Beginn der Datenaufzeichnung kann wahlweise manuell mittels eines an der Datensammeleinrichtung vorgesehenen Tasters oder durch einen von der Datenerfassungs- und Steuereinrichtung 81 abgegebenen Startsignals erfolgen. Ergänzend hierzu besteht die Möglichkeit, einen Fernbedienungsschalter zur manuellen Ansteuerung vorzusehen. Dabei ist das optische Markierungssignal ebenfalls auf einer Videoausspiegelung zu erkennen.

Die Backup-Spannungsversorgung 51 dient dazu, zu verhindern, daß die Positionszähler des Stativkopfes 300 und Kamerawagens 400 in der Datensammeleinrichtung 80 ihre Kalibrierungseinstellung bzw. Grundeinstellung verlieren für den Fall, daß der Stativkopf oder der Kamerawagen bewegt wird, während die Stromversorgung für die Laufbildkamera nicht eingeschaltet ist und demzufolge auch die Stromversorgung für die Datensammeleinrichtung nicht wirksam ist, wenn diese direkt von der Kamera bezogen wird.

Nach der Abgabe des Markierungsimpulses und dem damit verbundenen automatischen Start der Datenerfassung und Datenübertragung werden Bildinformationen, Aufnahmesequenzinformationen, Kalibrierungsinformationen sowie der generelle Systemstatus über die Daten- und Steuerleitung 85 gemäß Figur 12 an die Datenerfassungs- und Steuereinrichtung 81 abgegeben.

Am Ende der Aufnahmesequenz, wenn die Kamerageschwindigkeit unter drei Bilder pro Sekunde absinkt, wird die Datenerfassung automatisch gestoppt. Alternativ hierzu können individuelle Schwellwerte für die Beendigung der Datenerfassung vorgesehen werden, um den gesamten Geschwindigkeitsbereich der Laufbildkamera zu nutzen.

## Patentansprüche

1. Vorrichtung zur Steuerung, Regelung und Überwachung einer Laufbildkamera mit einer Steuer- und Datenerfassungseinrichtung (2, 8), die einerseits mit Kamera- und/oder Aufnahmefunktionen steuernden und erfassenden Einrichtungen (14 - 18; 300, 400) und andererseits mit Bedienungs- und Kontrolleinrichtungen (3, 4, 5, 6, 40) zur Steuerung und Überwachung der Kamera- und/oder Aufnahmefunktionen verbunden ist,
**dadurch gekennzeichnet,**
daß die Steuer- und Datenerfassungseinrichtung (2, 8) aus einer mit den die Kamera- und/oder Aufnahmefunktionen steuernden und erfassenden Einrichtungen (14 - 18; 300, 400) elektrisch verbundenen kameraseitigen Steuer- und Datenerfassungseinheit (2) und mehreren, unterschiedlichen Funktionen (Steuerung, Überwachung, Datenerfassung) zugeordneten, bedienerseitigen Kontrolleinheiten (3, 4, 5, 6, 7, 40) zur Eingabe von Steuerdaten und Übermittlung von Steuersignalen zur Steuerung von Kamera/Aufnahmefunktionen an die Steuer- und Datenerfassungseinheit (2) sowie zum Empfang von erfaßten Kamera/Aufnahmefunktionen von der Steuer- und Datenerfassungseinheit (2) besteht und daß die kameraseitige Steuer- und Datenerfassungseinheit (2) und die bedienerseitigen Kontrolleinheiten (3, 4, 5, 6, 40) jeweils eine bidirektionale Funk-Sende-Empfangseinheit aufweisen.

2. Vorrichtung nach Anspruch 1, **dadurch gekennzeichnet,** daß die Steuer- oder Datenerfassungseinheit (2, 8) mit einer filmfeste Markierungen erzeugenden und/oder erfassenden Einrichtung (17) verbunden ist bzw. sind.

3. Vorrichtung nach Anspruch 1 oder 2, **dadurch gekennzeichnet,** daß die kameraseitige Steuer- und Datenerfassungseinheit (2) mit einer Schnittstelle zur Verbindung der Steuer- und Erfassungseinheit (2) mit einem mit Fernbedienungs- und Überwachungseinrichtungen verbundenen BUS-Kabel versehen ist.

4. Vorrichtung nach Anspruch 4, **dadurch gekennzeichnet,** daß die bedienerseitige Kontrolleinheit (3, 4, 5, 6) modular aufgebaut ist und
a) einen LCS-BUS-Adapter mit einer Linsensteuersystem- und Kamera-Kontrolleinheit-Buchse zum Anschluß mindestens einer die Kamerafunktionen steuernden Fernbedienungseinheit und zur Abgabe von BUS-Steuersignalen,
b) einem mikroprozessorunterstützten Controller für die Umformung von Eingabe-Steuersignalen und den BUS-Steuersignalen in ein für eine Funkübertragung geeignetes Format und
c) ein Modem-Modul mit einem Daten-Modem mit abgestimmtem Anschluß zum Controller enthält.

5. Vorrichtung nach mindestens einem der vorangehenden Ansprüche, **dadurch gekennzeichnet,** daß die bedienerseitigen Kontrolleinheiten (3 bis 6) und die kameraseitige Steuer- und Datenerfassungseinheit (2) eine Einrichtung zur Auswahl eines von mehreren Funkbändern aufweisen.

6. Vorrichtung nach mindestens einem der vorangehenden Ansprüche, **dadurch gekennzeichnet,** daß eine bedienerseitige Kontrolleinheit aus einem Pen-based Computer (5) besteht.

7. Vorrichtung nach mindestens einem der vorangehenden Ansprüche, **dadurch gekennzeichnet,** daß ein bedienerseitige Kontrolleinheit (3) mit mindestens einer Kabel-Fernbedienungseinheit (7, 8) über einen BUS-Adapter verbunden ist.

8. Vorrichtung nach mindestens einem der vorangehenden Ansprüche, **dadurch gekennzeichnet,** daß die Funksende- und Empfangseinheit der kameraseitigen Steuer- und Erfassungseinheit (2) und die Funksende- und Empfangseinheit der bedienerseitigen Kontrolleinheit (3 bis 7) aus einem Mikrowellen-Transceiver bestehen.

9. Vorrichtung nach Anspruch 8, **dadurch gekennzeichnet,** daß die Mikrowellen-Transceiver mit einer Spread-Spektrum-Sende/Empfangs-Technologie versehen sind.

10. Vorrichtung nach mindestens einem der vorangehenden Ansprüche, **dadurch gekennzeichnet,** daß in den Mikrowellen-Transceivern ein Protokoll mit automatischem CRC-Check verwendet wird.

11. Vorrichtung nach mindestens einem der vorangehenden Ansprüche, **dadurch gekennzeichnet,** daß die kameraseitige Steuer- und Datenerfassungseinheit (2) und die bedienerseitige Kontrolleinheit (3 bis 7) einen Mikrocomputer zum Protokollieren von kameraspezifischen Daten, wie belichtete Filmlänge, Speicherung von Aufnahmesequenzen, Abgabe von Steuersignalen zur Steuerung von Kamerafunktionen und dgl. aufweisen.

12. Vorrichtung nach mindestens einem der vorangehenden Ansprüche, **gekennzeichnet** durch ein Datenaufzeichnungs- und Steuersystem (8), das mit
a) einem Anschluß (100) der Laufbildkamera (1) zur Erfassung oder Steuerung kameraspezifischer Einstellungen, wie Aufnahmegeschwindigkeit, Blendensektor, Irisblendenöffnung, Filmmarkierungen, Kassettenmarkierungen und dgl.,
b) der kameraseitigen Steuer- und Erfassungseinheit (2),
c) einer oder mehreren Fernbedienungseinheiten (3, 4, 5, 7, 30, 71, 72),
sowie optional mit
d) einer Positionseinstell- und Erfassungseinheit (300) für einen Stativkopf,
e) einer Positionssteuer- und/oder Erfassungseinheit (400) für einen Kamerawagen,
f) dem Steuergerät zur Erzeugung filmfester Markierungen (17),
g) einer Eingabetastatur (82),
h) einer Datensicherungsbatterie (51) und
i) mit einem externen Timecode-Signalgeber (50)
verbunden ist.

13. Vorrichtung nach Anspruch 12, **dadurch gekennzeichnet,** daß das Datenaufzeichnungs- und Steuersystem (8) aus einer Datenerfassungs- und Verteilungseinrichtung (80) und einem die erfaßten Daten speichernden und Steuersignale abgebenden Computer (81) besteht, die über eine Daten- und Steuerleitung (85) miteinander verbunden sind.

## Claims

1. Device for controlling, regulating and monitoring a cine camera with a control and data detection device (2, 8) which is connected on one side to devices (14 to 18; 300, 400) controlling and detecting camera and/or recording functions and on the other side to operating and control devices (3 ,4,5,6, 40) for controlling and monitoring the camera and/or recording functions characterised in that the control and data detection device (2, 8) consists of a control and data detection unit (2) on the camera side connected electrically to the devices (14-18;300, 400) which control and detect the camera and/or recording functions, and of several control units (3,4,5,6,7, 40) on the operator side associated with different functions (control, monitoring, data detection) for the input of control data and sending of control signals for controlling camera/recording functions to the control and data detection unit (2) as well as for receiving detected camera/recording functions from the control and data detection unit (2) and that the control and data detection unit (2) on the camera side and the control units (3, 4, 5, 6, 40) on the operator side each have a bi-directional radio transmitter/receiver unit.

2. Device according to claim 1 characterised in that the control or data detection unit (2, 8) is or are connected to a device (17) which produces and/or detects film-fixed markings.

3. Device according to claim 1 or 2 characterised in that the control and detection unit (2) on the camera side is connected to an interface for connecting the control and detection unit (2) to a BUS cable connected to remote control and monitoring devices.

4. Device according to claim 4 characterised in that the control unit (3, 4 5, 6) on the operator side is of modular construction and contains
a) an LCS BUS adapter with a lens control system and camera control unit socket for attaching at least one remote control unit controlling the camera functions and for sending out BUS control signals,
b) a microprocessor-supported controller for reforming the input control signals and BUS control signals into a format suitable for radio transmission and
c) a modem module with a data modem with matched connection for the controller.

5. Device according to at least one of the preceding claims characterised in that the control units (3 to 6) on the operator side and the control and detection unit (2) on the camera side have a device for selecting one of several radio bands.

6. Device according to at least one of the preceding claims characterised in that a control unit on the operator side consists of a pen-based computer (5).

7. Device according to at least one of the preceding claims characterised in that a control unit (3) on the operator side is connected by a BUS adapter to at least one cable remote control unit (7, 8).

8. Device according to at least one of the preceding claims characterised in that the radio transmission and receiving unit of the control and detection unit (2) on the camera side, and the radio transmitting and receiving unit of the control unit (3 to 6) on the operator side consist of a microwave transceiver.

9. Device according to claim 8 characterised in that the microwave transceivers are provided with spread spectrum transmitting/receiving technology.

10. Device according to at least one of the preceding claims characterised in that a protocol with automatic CRC check is used in the microwave transceivers.

11. Device according to at least one of the preceding claims characterised in that the control and detection unit (2) on the camera side and/or the control unit (3 to 6) on the operator side have a micro computer for protocolling camera-specific data such as exposed film length, storage of recording sequences, sending out control signals for controlling camera functions and similar.

12. Device according to at least one of the preceding claims characterised by a data recording and control system (8) which is connected to
a) a socket (100) on the cine camera (1) for detecting and/or controlling camera-specific settings, such as recording speed, aperture sector, iris diaphragm opening, film markings, cassette markings and similar,
b) the control and detection unit (2) on the camera side
c) one or more remote control units (3, 4 5, 7, 30, 71, 72)
as well as optionally to
d) a position setting and/or detection unit (300) for a tripod head,
e) a position control and/or detection unit (400) for a camera trolley
f) the control device for producing film-fixed markings (17)
g) an input keyboard (82)
h) a data security battery (51) and/or
i) to an external time code signal provider (50).

13. Device according to claim 12 characterised in that the data listing and control system (8) consists of a data detection and distribution device (80) and a computer (81) which stores the detected data and sends out control signals, with the two being linked together by a data and/or control lead (85).

## Revendications

1. Dispositif de commande, de réglage et de contrôle d'une caméra cinématographique comportant un dispositif de commande et de détection de données (2, 8) qui est relié d'une part à des dispositifs (14-18; 300, 400) commandant et détectant des fonctions de la caméra et/ou des fonctions de prise de vues et d'autre part à des dispositifs de manipulation et de contrôle (3, 4, 5, 6, 40) pour commander et contrôler les fonctions de la caméra et/ou les fonctions de prise de vues,
caractérisé en ce
que le dispositif de commande et de détection de données (2, 8) est constitué par une unité de commande et de détection de données (2), située côté caméra et qui est reliée électriquement aux dispositifs (14-18; 300, 400) qui commandent et détectent des fonctions de la caméra et/ou les fonctions de prise de vues et par plusieurs unités de commande de contrôle (3, 4, 5, 6, 7, 40) situées côté utilisateur, qui sont associées à différentes fonctions (commande, contrôle, détection de données), pour l'introduction de données de commande et la transmission de signaux de commande pour commander des fonctions de la caméra/des fonctions de prise de vues à l'unité de commande et de détection de données (2) ainsi que pour la réception de fonctions détectées de la caméra et/ou de fonctions de prise de vues par l'unité de commande de détection de données (2), et que l'unité de commande et de détection de données (2) située côté caméra et les unités de commande (3, 4, 5, 6, 7, 40) situées côté utilisateur possèdent respectivement une unité d'émission-réception radio bidirectionnelle.

2. Dispositif selon la revendication 1, caractérisé en ce que l'unité de commande ou de détection de données (2, 8) est reliée à un dispositif (17) qui produit et/ou détecte des marques solidaires du film.

3. Dispositif selon la revendication 1 ou 2,
caractérisé en ce que l'unité de commande et de détection de données (2) située côté caméra est équipée d'une interface pour relier l'unité de commande et de détection (2) à un câble BUS relié à des dispositifs de télécommande et de contrôle.

4. Dispositif selon la revendication 4, caractérisé en ce que l'unité de contrôle (3, 4, 5, 6) située côté utilisateur possède un agencement modulaire et contient
a) un adaptateur LCS-BUS comportant une prise d'un système de commande de lentilles et une prise d'unité de contrôle de la caméra pour le raccordement d'au moins une unité de télécommande, qui commande les fonctions de la caméra, et pour la délivrance de signaux de commande de BUS,
b) un contrôleur assisté par microprocesseur pour la transformation de signaux de commande d'entrée et des signaux de commande de bus en un format approprié pour une transmission radio, et
c) un module de modem comportant un modem pour les données, pourvu d'une borne accordée de liaison avec le contrôleur.

5. Dispositif selon au moins l'une des revendications précédentes, caractérisé en ce que les unités de contrôle (3 à 6) côté utilisateur et l'unité de commande et de détection de données (2) côté caméra possèdent un dispositif pour sélectionner l'une de plusieurs bandes radio.

6. Dispositif selon au moins l'une des revendications précédentes, caractérisé en ce qu'une unité de contrôle située côté utilisateur est constituée par un ordinateur (5) utilisant un stylet.

7. Dispositif selon au moins l'une des revendications précédentes, caractérisé en ce qu'une unité de contrôle (3) située côté utilisateur est reliée à au moins une unité de télécommande à câble (7, 8) par l'intermédiaire d'un adaptateur de BUS.

8. Dispositif selon au moins l'une des revendications précédentes, caractérisé en ce l'unité d'émission et de réception radio de l'unité de commande et de détection (2) située côté caméra et l'unité d'émission et de réception radio de l'unité de contrôle (3 à 7) située côté utilisateur sont constituées par un émetteur-récepteur de micro-ondes.

9. Dispositif selon la revendication 8, caractérisé en ce que les émetteurs-récepteurs de micro-ondes sont équipés d'une technologie d'émission/réception de spectre étalé.

10. Dispositif selon au moins l'une des revendications précédentes, caractérisé en ce qu'un protocole avec contrôle automatique de CRC est utilisé dans les émetteurs-récepteurs de micro-ondes.

11. Dispositif selon au moins l'une des revendications précédentes, caractérisé en ce que l'unité de commande et de détection de données (2) située côté caméra et l'unité de contrôle (3 à 7) située côté utilisateur comportent un micro-ordinateur pour établir le listing de données spécifiques à la caméra comme la longueur de film exposée, la mémorisation de séquences de prises de vues, la délivrance de signaux de commande pour la commande de fonctions de la caméra, et analogues.

12. Dispositif selon au moins l'une des revendications précédentes, caractérisé par un système (8) d'enregistrement de données et de commande, qui est relié à
a) une borne (100) de la caméra cinématographique (1) pour détecter ou commander des réglages spécifiques à la caméra, comme la vitesse de prise de vues, le secteur de diaphragme, l'ouverture du diaphragme à iris, des marques appliquées sur le film, des marques appliquées sur des cassettes, et analogues,
b) à l'unité de commande et de détection (2) située côté caméra,
c) à une ou plusieurs unités de télécommande (3, 4, 5, 6, 7, 30, 71, 72),
et facultativement à
d) une unité (300) de réglage et de détection de position pour une tête de statif,
e) une unité de commande et/ou de positionnement et/ou de détection (400) pour un chariot de la caméra,
f) l'appareil de commande pour la production de masques (17) fixés au film,
g) un clavier d'entrée (82),
h) une pile (51) pour la protection des données, et
i) un générateur externe de signaux de code temporel (50).

13. Dispositif selon la revendication 12, caractérisé en ce que le système d'enregistrement et de commande (8) est constitué par un dispositif de détection de données et de distribution (80) et par un ordinateur (81) qui mémorise les données détectées et délivre des signaux de commande, ces unités étant reliées entre elles par l'intermédiaire d'une ligne de transmission de données et de commande (85).
